**Europäisches Patentamt**

**European Patent Office**

**Office européen des brevets**

(19)

(11) **EP 0 864 999 A2**

(12) **EUROPÄISCHE PATENTANMELDUNG**

(43) Veröffentlichungstag:
16.09.1998 Patentblatt 1998/38

(51) Int. Cl.⁶: $G06T\ 11/00$

(21) Anmeldenummer: 98200717.1

(22) Anmeldetag: 06.03.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 04.04.1997 DE 19713846
13.03.1997 DE 19710339

(71) Anmelder:
• Philips Patentverwaltung GmbH
22335 Hamburg (DE)
Benannte Vertragsstaaten:
DE
• Koninklijke Philips Electronics N.V.
5621 BA Eindhoven (NL)
Benannte Vertragsstaaten:
FR GB NL

(72) Erfinder:
• Carlsen, Ingwer I. C. Dr.
Röntgenstrasse 24, 22335 Hamburg (DE)

• Grass, Michael, Dr.
Röntgenstrasse 24, 22335 Hamburg (DE)
• Rasche, Volker, Dr.
Röntgenstrasse 24, 22335 Hamburg (DE)
• van Vaals, Johannes Jacobus, Dr.
Röntgenstrasse 24, 22335 Hamburg (DE)

(74) Vertreter:
Hartmann, Heinrich, Dipl.-Ing. et al
Philips Patentverwaltung GmbH,
Röntgenstrasse 24
22335 Hamburg (DE)

Bemerkungen:
Ein Antrag gemäss Regel 88 EPÜ auf Berichtigung der Zeichnungen liegt vor. Über diesen Antrag wird im Laufe des Verfahrens vor der Prüfungsabteilung eine Entscheidung getroffen werden (Richtlinien für die Prüfung im EPA, A-V, 3.).

(54) **Bildverarbeitungs-Verfahren für die medizinische Diagnostik**

(57) Die Erfindung betrifft ein Bildverarbeitungs-Verfahren zur Verbesserung des Signal/Rauschverhältnisses bei einer Folge von auf der Projektions-Rekonstruktionsmethode basierenden MR-Bildern oder von CT-Bildern. Dabei werden zunächst in den eindimensionalen Projektionsbildern, aus denen sich die zweidimensionalen MR- oder CT-Bilder zusammensetzen, diejenigen Pixel ermittelt, die in den Projektionsbildern dieselbe Teilstruktur abbilden. Die Bildwerte dieser Pixel werden zur Rauschfilterung herangezogen. Aus den rauschgefilterten, eindimensionalen Projektionsbildern werden zweidimensionale MR- oder CT- Bilder rekonstruiert.

Fig.3

EP 0 864 999 A2

**Beschreibung**

Die Erfindung betrifft ein Bildverarbeitungs-Verfahren für die medizinische Diagnostik, bei dem ein in einem Untersuchungsbereich befindliches Objekt mit einer Folge von zweidimensionalen Bildern aufgenommen wird, wobei jedes Bild der Folge aus einer Anzahl von eindimensionalen Projektionsbildern abgeleitet ist, die durch Projektion des Objektes aus einer von einer Anzahl vorgegebener Projektionsrichtungen erzeugt werden und sich aus Pixeln zusammensetzen.

Derartige Verfahren sind in der MR-Technik (MR steht für Magnet-Resonanz) bekannt in Verbindung mit der sogenannten Projektions-Rekonstruktions-Methode. Auch in der Röntgen-Computertomographie werden solche Verfahren benutzt.

In der medizinischen Diagnostik ist es oft erforderlich, von ein und demselben Objekt eine Folge von Bildern aufzunehmen, die das Objekt z.B. in unterschiedlichen Bewegungsphasen darstellen. Die Qualität der einzelnen Bilder ist dabei meist durch Rauschen begrenzt. Dieses Rauschen ergibt sich bei MR-Verfahren, wenn man die für die Rekonstruktion der Bilder erforderlichen MR-Signale in möglichst kurzer Zeit akquiriert. Bei Röntgen-CT-Verfahren ergibt sich das Rauschen dann, wenn man pro Einzelbild nur mit einer geringen Dosis arbeitet, um die Strahlenbelastung des Patienten gering zu halten.

Aus einem Artikel von T. A. Reinen in Proc. SPIE, Vol. 1606, pp. 755-763, 1991, ist ein Verfahren bekannt, das bei einer solchen Bildfolge das Rauschen durch Ermittlung eines Bewegungsvektorfeldes, durch die Anwendung eines Rauschminderungsfilters auf die durch das Bewegungsvektorfeld miteinander verknüpften Pixel (Pixel = Bildelement) und durch die Übernahme der aus der Filterung resultierenden Bildwerte in ein Ausgangsbild verringert. Dem liegt die Überlegung zugrunde, daß sich die einzelnen Bilder der Folge zwar voneinander unterscheiden, weil sich zumindest einige Details an unterschiedlichen Positionen innerhalb der Bilder befinden, daß jedoch diese Details in den verschiedenen Bildern in der Regel mit der gleichen Helligkeit wiedergegeben werden. Dies erlaubt es, zwei Bilder der Folge durch ein Bewegungsvektorfeld zu verknüpfen, das die Verschiebung dieser Details von einem Bild zum anderen beschreibt und somit die inhaltlich einander zugeordneten Pixel (also Pixel, die in den verschiedenen Bildern denselben Punkt einer Struktur abbilden) miteinander verknüpft. Das bekannte Rauschminderungs-Verfahren könnte auch auch auf Bildfolgen angewandt werden, die mit dem eingangs genannten Verfahren erzeugt werden.

Nachteilig an diesem Verfahren ist, daß es relativ lange dauert, weil im Prinzip für jedes Pixel in einem Bild das inhaltlich zugeordnete Pixel innerhalb eines zweidimensionalen Fensters im anderen Bild gesucht werden muß. Aufgabe der vorliegenden Erfindung ist es daher, ein Bildverarbeitungsverfahren der eingangs genannten Art so auszugestalten, daß die Rauschminderung schneller durchgeführt werden kann als mit dem bekannten Rauschminderungsverfahren.

Diese Aufgabe wird erfindungsgemäß dadurch gelöst, daß folgende Schritte durchgeführt werden:

a) Ermittlung eines Bewegungsvektorfeldes, das die inhaltlich einander zugeordneten Pixel in Projektionsbildern mit der gleichen und/oder der entgegengesetzten Projektionsrichtung miteinander verknüpft,
b) Anwendung eines Rauschminderungs-Filters auf die Bildwerte der durch das Bewegungsvektorfeld miteinander verknüpften Pixel und ggf. auf deren Nachbarpixel,
c) Übernahme der aus der Filterung resultierenden Bildwerte in ein Ausgangs-Projektionsbild,
d) Rekonstruktion der Bilder aus den zugehörigen Ausgangs-Projektionsbildern.

Bei der Erfindung wird das Rauschminderungsverfahren also nicht auf die einzelnen Bildpunkte eines zweidimensionalen MR- oder CT-Bildes angewandt, sondern auf die Pixel eines eindimensionalen Projektionsbildes, was den Vorteil hat, daß nur innerhalb eines eindimensionalen Fensters nach inhaltlich einander zugeordneten Pixeln gesucht werden muß. Dieses Verfahren ist also schneller. Das zweidimensionale MR- oder CT-Bild wird aus einer Anzahl von auf diese Weise rauschgefilterten, eindimensionalen Projektionsbildern abgeleitet.

Eine Möglichkeit zur Ermittlung eines Bewegungsvektorfeldes für ein Projektionsbild ist in Anspruch 2 angegeben. Die am besten übereinstimmenden Blöcke können dabei gemäß Anspruch 3 ermittelt werden. Die dort vorgesehene Ermittlung der Position mit dem optimalen Ähnlichkeitsmaß kann entsprechend Anspruch 4 durchgeführt werden.

Eine andere Möglichkeit zur Ermittlung eines Bewegungsvektorfeldes ist in Anspruch 5 angegeben. Dadurch, daß das Bewegungsvektorfeld dabei zunächst mit einer relativ groben und danach mit immer feinerer Auflösung ermittelt wird, ergibt sich eine schnelle und gegen Artefakte weitgehend unempfindliche Ermittlung des Bewegungsvektorfeldes.

Ein bevorzugtes Rauschfilter ist in Anspruch 6 angegeben.

Anspruch 7 beschreibt ein auf eindimensionale Projektionsbilder zugeschnittenes Verfahren, wahrend Anspruch 8 eine Anordnung beschreibt, mit der das erfindungsgemäße Verfahren durchführbar ist.

Die Erfindung wird nachstehend anhand der Zeichnungen näher erläutert. Es zeigen:

Fig. 1 ein MR-System, mit dem die Erfindung ausführbar ist,

Fig. 2 die Enstehung eines eindimensionalen Projektionsbildes,

Fig. 3 zwei aufeinanderfolgende Projektionsbilder,

Fig. 4 ein Ablaufdiagramm des erfindungsgemäßen Verfahrens,

Fig. 5 ein Ablaufdiagramm zur Ermittlung eines Bewegungsvektorfeldes,

Fig. 6 ein Ablaufdiagramm für eine Modifikation des Verfahrens und

Fig. 7 ein Ablaufdiagramm eines bevorzugten Verfahrens zur Bestimmung des Bewegungsvektorfeldes.

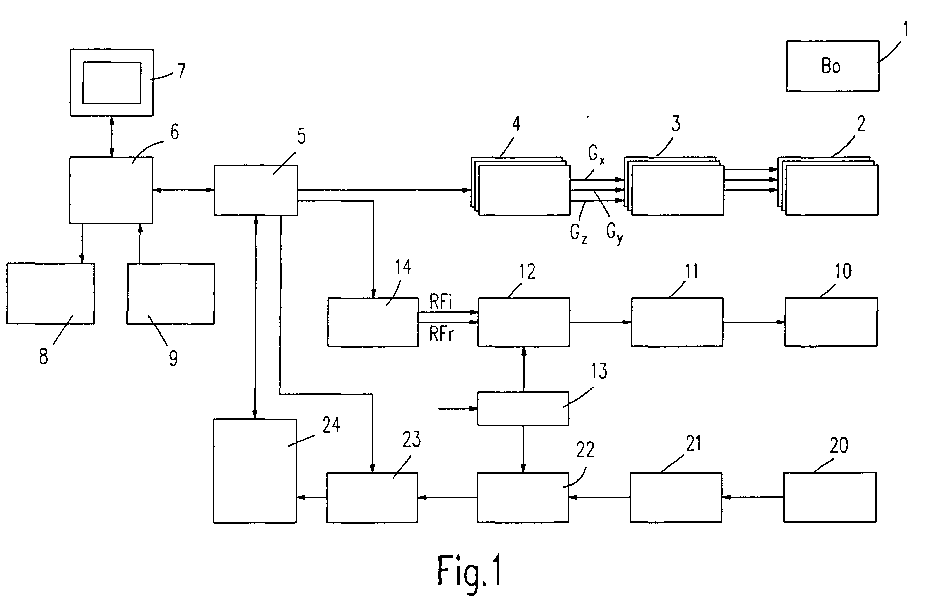

In Fig. 1 ist mit 1 ein schematisch dargestellter Hauptfeldmagnet bezeichnet, der in einem nicht näher dargestellten Untersuchungsbereich ein in z-Richtung verlaufendes stationäres und im wesentlichen homogenes Magnetfeld mit einer Stärke von z.B. 1,5 Tesla erzeugt. Die z-Richtung verläuft dabei in Längsrichtung eines nicht näher dargestellten Untersuchungstisches, auf dem sich während einer Untersuchung ein Patient befindet.

Weiterhin ist eine Gradientenspulenanordnung 2 vorgesehen, die drei Spulensysteme umfaßt, mit denen in z-Richtung verlaufende magnetische Gradientenfelder $G_x$, $G_y$ bzw. $G_z$ mit einem Gradienten in x-, y- bzw. z-Richtung erzeugt werden können. Die Ströme für die Gradientenspulenanordnung 2 werden von je einem Gradientenverstärker 3 geliefert. Ihr zeitlicher Verlauf wird von einem Waveform-Generator 4 vorgegeben, und zwar für jede Richtung gesondert. Der Waveform-Generator 4 wird von einer Rechen- und Steuereinheit 5 gesteuert, die den für ein bestimmtes Untersuchungsverfahren erforderlichen zeitlichen Verlauf der magnetischen Gradientenfelder $G_x$, $G_y$, $G_z$ berechnet und in den Waveform-Generator 4 lädt. Bei der MR-Untersuchung werden diese Signale aus dem Waveform-Generator 4 ausgelesen und der Gradientenverstärkeranordnung 3 zugeführt, die daraus die für die Gradientenspulenanordnung 2 erforderlichen Ströme erzeugt.

Die Steuereinheit 5 wirkt außerdem noch mit einer Work-Station 6 zusammen, die mit einem Monitor 7 zur Wiedergabe von MR-Bildern versehen ist. Über eine Tastatur 8 oder eine interaktive Eingabeeinheit 9 sind Eingaben möglich.

Die Kernmagnetisierung im Untersuchungsbereich kann durch Hochfrequenzimpulse einer Hochfrequenzspule 10 angeregt werden, die an einen Hochfrequenzverstärker 11 angeschlossen ist, der die Arnsgangssignale eines Hochfrequenzsenders 12 verstärkt. In dem Hochfrequenzsender 12 werden die (komplexen) Einhüllenden der Hochfrequenzimpulse mit den von einem Oszillator 13 gelieferten Trägerschwingungen moduliert, deren Frequenz der Larmor-Frequenz (bei einem Hauptmagnetfeld von 1,5 Tesla ca. 63 MHz) entspricht. Die komplexe Einhüllende wird von der Rechen- und Steuereinheit in einen Generator 14 geladen, der mit dem Sender 12 gekoppelt ist.

Die im Untersuchungsbereich erzeugten MR-Signale werden von einer Empfangsspule 20 aufgenommen und von einem Verstärker 21 verstärkt. Das verstärkte MR-Signal wird in einem Quadratur-Demodulator 22 durch zwei um 90° gegeneinander versetzte Trägerschwingungen des Oszillators 13 demoduliert, so daß zwei Signale erzeugt werden, die als Realteil und als Imaginärteil eines komplexen MR-Signals aufgefaßt werden können. Diese Signale werden einem Analog-Digitalwandler 23 zugeführt, der daraus MR-Daten bildet. Aus den von einem MR-Signal abgeleiteten MR-Daten wird in einer Bildverarbeitungseinheit 24 durch eine Fourier-Transformation je ein eindimensionales Projektionsbild (view) erzeugt. Nachdem auf diese Projektionsbilder ein Rauschminderungsfilter angewandt worden ist, werden daraus - ebenfalls in der Bildverarbeitungseinheit 24 - zweidimensionale MR-Bilder rekonstruiert. Diese werden nach Anwendung eines Rauschminderungsfilters auf dem Monitor 7 wiedergegeben.

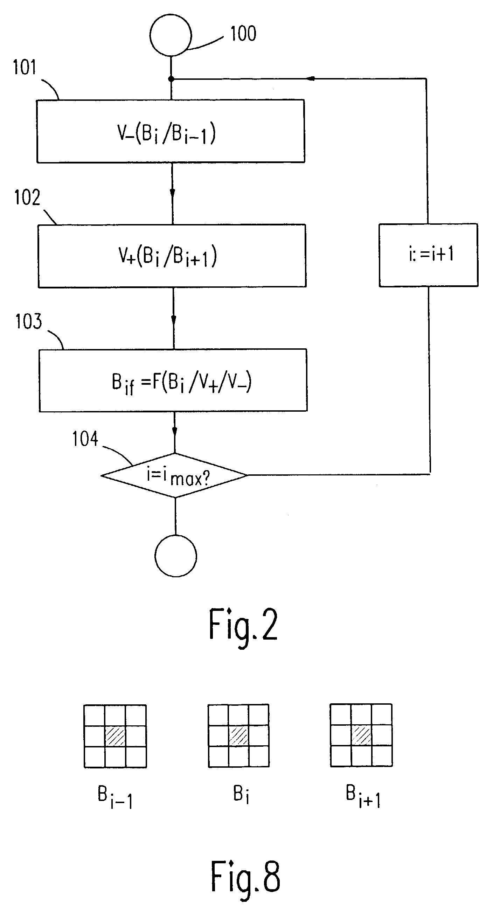

Fig. 2 zeigt den Helligkeitsverlauf in einem eindimensionalen Projektionsbild $B_i$ eines zweidimensionalen Untersuchungsobjektes 30. Ein solches Projektionsbild ergibt sich, wenn man nach der Anregung der Kernmagnetisierung in einer Schicht des Untersuchungsbereichs 30 das MR-Signal - ohne Phasenkodierung - mit einem in Richtung des ausgezogen dargestellten Pfeils verlaufenden Lesegradienten ausliest und das MR-Signal einer Fourier-Transformation unterzieht. Aus einer Anzahl solcher eindimensionaler Projektionen mit unterschiedlichen Gradientenrichtungen (diese sind in Fig. 2 durch gestrichelte Pfeile angedeutet) läßt sich ein zweidimensionales Bild der Kernmagnetisierungsverteilung in der Schicht des Untersuchungsobjekts 30 rekonstruieren. Wiederholt man diese Sequenzen zyklisch, dann gewinnt man eine Anzahl von Sätzen eindimensionaler Bilder, aus denen sich je ein zweidimensionales Bild rekonstruieren läßt.

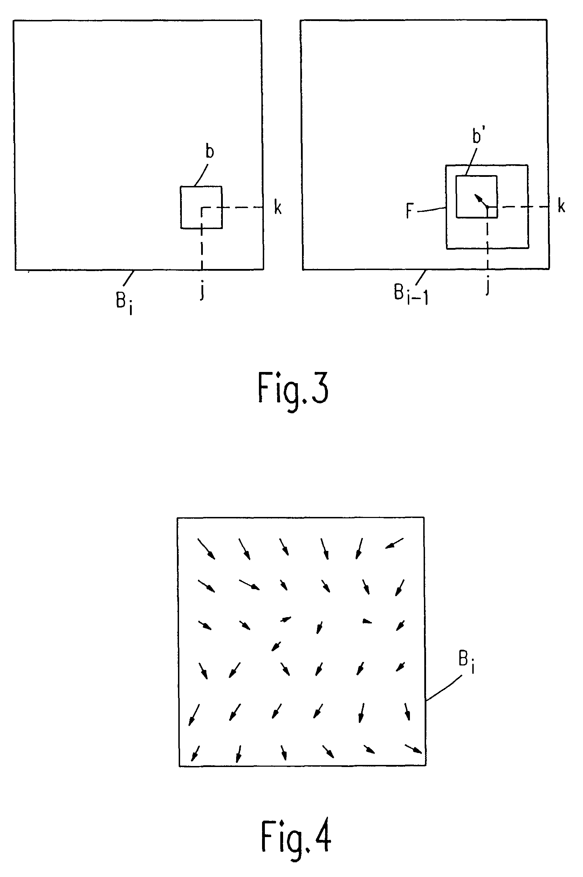

Fig. 3 zeigt ausschnittsweise zwei derartige eindimensionale Projektionsbilder $B_i$ und $B_{i-1}$, wobei angenommen ist, daß diese Bilder mit der gleichen bzw. der entgegengesetzten Gradientenrichtung (d.h. mit einer Differenz der Gradientenrichtungen von 360° oder 180°) aufgenommen worden sind. Sie stellen somit eine Projektion des Objektes zu unterschiedlichen Zeitpunkten, jedoch mit der gleichen bzw. der entgegengesetzten Gradientenrichtung dar. Jedes Bild besteht aus einer Anzahl von in Fig. 3 durch Kästchen symbolisierten Pixeln, z.B. 128 oder 256, denen ein Bildwert zugeordnet ist, der dem Linienintegral der Kernmagnetisierung in Richtung senkrecht zur jeweiligen Gradientenrichtung entspricht.

Wären die beiden Projektionsbilder $B_i$ und $B_{i-1}$ identisch, wären alle Vektoren des Bewegungsvektors Null. Da sich die Bilder in der Regel aber wenigstens in einigen Bereichen unterscheiden, ergeben sich dort von Null verschiedene Bewegungsvektoren m. Jeder dieser Vektoren gibt an, um wieviel und in welcher Richtung die Pixel in den beiden Bildern gegeneinander versetzt sind, die ein und denselben Punkt bzw. Bereich des Untersuchungsobjekts abbilden. Daraus ergibt sich eine Zuordnung der Adressen, unter denen die Bildwerte der beiden inhaltlich einander zugeordneten Pixel in den beiden Bildern abgespeichert sind.

Im Projektionsbild $B_i$ ist ein aus drei (oder mehr) zusammenhängenden Pixeln bestehender Block b dargestellt, der um das Pixel j zentriert ist. In dem vorangehenden Projektionsbild $B_{i-1}$ kann der Block b', der dieselben Strukturen im Untersuchungsobjekt 30 abbildet, sich aufgrund von Objektbewegungen zwischen der Erfassung der zu den Bildern $B_1$ und $B_{i-1}$ gehörenden MR-Signale verschoben haben, d.h. im Abstand m vom Pixel j im Projektionsbild $B_{i-1}$ liegen. Es kommt somit darauf an, für die Pixel j im Bild $B_i$ automatisch jeweils den Bewegungsvektor m zu ermitteln, der in den aufeinanderfolgenden Projektionsbildern $B_i$ und $B_{i-1}$ die inhaltlich einander zugeordneten Pixel miteinander verknüpft. Die Bildwerte dieser Pixel werden einer Filterung unterzogen.

Der Ablauf der Verarbeitungsschritte in der Bildverarbeitungseinheit 24 - soweit er die Rauschminderung betrifft - wird nachstehend anhand von Fig. 4 erläutert. Nach der Initialisierung - Schritt 100 - liegen in der Bildverarbeitungseinheit 24 zwei, drei oder mehr Projektionsbilder vor, die eine Projektion des Objekts 30 unter dem gleichen oder demgegenüber um 180° versetzten Projektionswinkel darstellen und die an aufeinanderfolgenden Zeitpunkten aufgenommen worden sind. Sie stellen somit das Untersuchungsobjekt in verschiedenen Bewegungsphasen (eindimensional) dar. Die aufeinanderfolgenden Projektionsbilder unterscheiden sich also - wenn auch oft nur geringfügig.

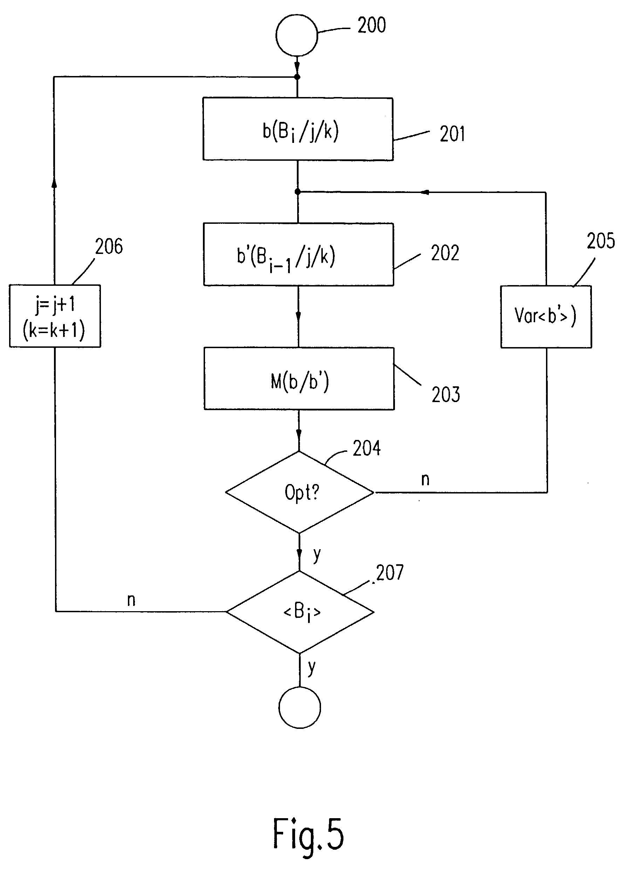

Im Schritt 101 wird das Bewegungsvektorfeld m ermittelt, durch das sich ein Projektionsbild $B_i$ von dem vorhergehenden Projektionsbild $B_{i-1}$ mit derselben Projektionsrichtung unterscheidet. Die einzelnen Schritte zur Bestimmung der Bewegungsvektoren werden nachfolgend anhand des in Fig. 5 dargestellten Ablaufdiagramms erläutert.

Im Schritt 201 wird ein bestimmter Block b im Projektionsbild $B_i$ vorgegeben, z.B. der um das Pixel j zentrierte Block. Im Verfahrensschritt 202 wird ein Block b' im vorangehenden Projektionsbild $B_{i-1}$ bestimmt, der innerhalb eines Fensters F (siehe Fig. 3) um das Pixel j liegt. Das Fenster sollte einerseits genügend groß sein, um auch die größten Verschiebungen zwischen den beiden Bildern erfassen zu können, und andererseits möglichst klein, um den Rechenaufwand gering zu halten.

Im Schritt 203 wird dann die Übereinstimmung der vorgegebenen Blöcke b und b' mit einem geeigneten Ähnlichkeitsmaß M bewertet. Im einfachsten Fall wird der Betrag oder das Quadrat der Differenz von Bildwerten derjenigen Pixel gebildet, die innerhalb ihrer Blöcke die gleiche Lage haben, und die für alle Pixel innerhalb der Blöcke resultierenden Werte werden summiert. Wenn diese Summe ein Minimum aufweist, stimmt der Block b' am besten mit dem Block b überein. - Es hat sich aber gezeigt, daß dieses Minimum bei MR-Bildern nicht sehr ausgeprägt ist, so daß die Position des am besten übereinstimmenden Blocks b' nicht exakt zu ermitteln ist. Bessere Ergebnisse werden erreicht, wenn man die Korrelation der Bildwerte in den zueinander korrespondierenden Pixeln der Blöcke b und b' bestimmt.

Im Schritt 204 wird geprüft, ob der Block b' optimal mit dem vorgegebenen Block b im Bild $B_i$ übereinstimmt. Ist dies nicht der Fall, dann wird im Schritt 205 die Position des Bildausschnitts b' im Fenster F variiert, und es wird erneut das Ähnlichkeitsmaß berechnet (203) und geprüft, ob das Optimum erreicht ist (204). Wenn das Optimum erreicht ist, wird aus der dazu gehörenden Position des Blockes b' der Bewegungsvektor m abgeleitet.

Nachdem im Schritt 204 die optimale Übereinstimmung zwischen b und b' festgestellt worden ist, wird im Schritt 207 geprüft, ob für das Bild $B_i$ sämtliche erforderlichen Bewegungsvektoren ermittelt worden sind. Ist dies nicht der Fall, wird im Schritt 206 ein Block b mit einem anderen Mittelpunkt vorgegeben, und die Prozedur wird wiederholt, bis für alle Pixel des Bildes $B_i$ (oder zumindest für in bestimmten Abständen befindliche Pixel) der zugehörige Bewegungsvektor ermittelt ist und dieser Teil des Verfahrens abgeschlossen ist.

Grundsätzlich wäre es möglich, in der Schleife 202 .... 205 für sämtliche möglichen Positionen des Blocks b' im Fenster F ein Ähnlichkeitsmaß zu errechnen, die Ähnlichkeitsmaße für sämtliche Blockpositionen zu speichern und die Blockposition auszuwählen, bei der die Blöcke am besten übereinstimmen. Der Rechenaufwand hierfür wäre allerdings beträchtlich. Günstiger sind Verfahren, die aus der vorangegangenen Position des Blockes b' und den dafür im Schritt 203 ermittelten Ähnlichkeitsmaßen M die Position ableiten, die im darauffolgenden Durchlauf der Schleife 202 ... 205 eine bessere Übereinstimmung ergeben könnte. Auf diese Weise kann die optimale Position des Blockes b' iterativ mit weniger Durchläufen der Schleife 202 ... 205 ermittelt werden, als wenn jede mögliche Position des Blokkes b' innerhalb des Suchfensters F bewertet und dann die Position mit der bestmöglichen Übereinstimmung ausgewählt würde.

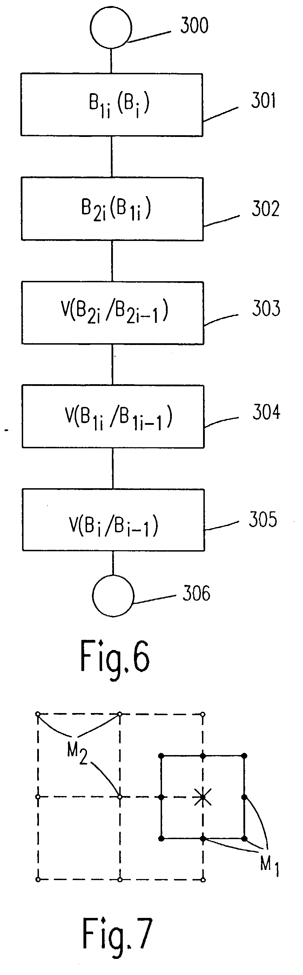

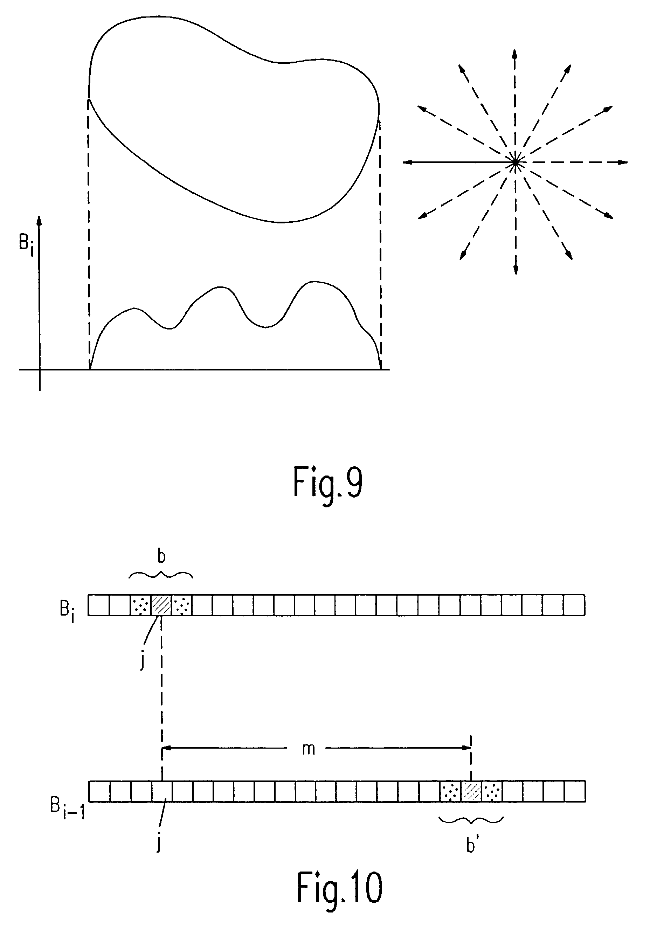

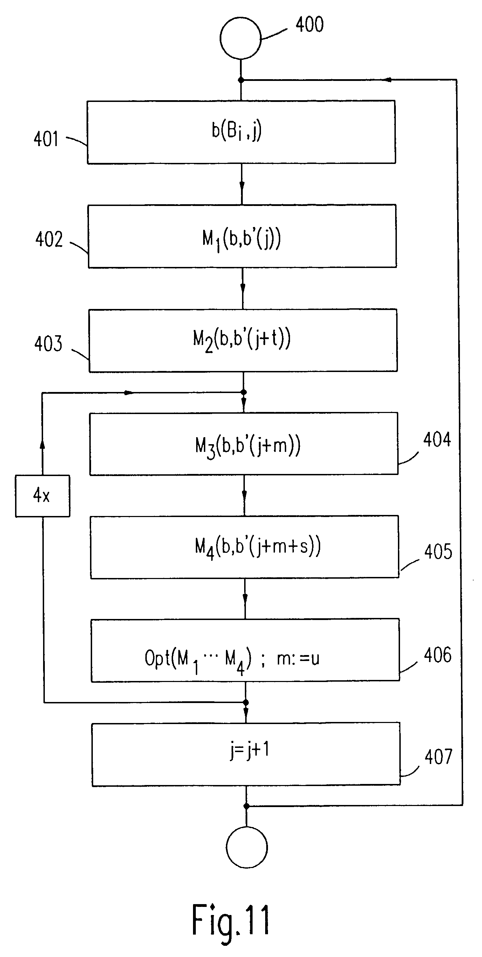

Fig. 6 erläutert eine Suchstrategie, mit der sich ein Bewegungsvektor besonders schnell ermitteln läßt. Dabei wird zunächst im Schritt 301 aus dem Bild $B_i$ ein Bild $B_{1i}$ abgeleitet, das nur noch die Hälfte der Pixel des bisherigen Bildes umfaßt und ein entsprechend verringertes räumliches Auflösungsvermögen hat. Aus dem Bild $B_i$ mit z.B. 256 Pixeln entstehen somit ein Bild $B_{1i}$, das dann nur noch 128 Pixel hat. Die Bildwerte dieses

niedrig aufgelösten Bildes $B_{1i}$ entstehen dadurch, daß das arithmetische Mittel der Bildwerte gebildet wird, die im Bild $B_i$ je einer Gruppe von zwei Pixeln zugeordnet sind.

Es wird angenommen, daß im Schritt 301 bereits ein entsprechend dezimiertes Bild $B_{1i-1}$ vorhanden ist, das aus dem vorangehenden Projektionsbild $B_{i-1}$ abgeleitet ist. Wenn dies nicht der Fall ist, muß dies ebenfalls im Schritt 301 erfolgen.

Im Schritt 302 wird aus dem bereits dezimierten Bild $B_{1i}$ ein nochmals dezimiertes Bild $B_{2i}$ abgeleitet, das bei dem gewählten Beispiel dann nur noch 64 Pixel umfaßt und dessen räumliches Auflösungsvermögen nur halb so groß ist wie das des Bildes $B_{1i}$. Erforderlichenfalls können sich daran noch weitere Dezimierungsschritte anschließen.

Im Schritt 303 wird dann für die zweifach dezimierten Bilder $B_{2i}$ und $B_{2i-1}$ ein Bewegungsvektorfeld bestimmt, wobei die Blöcke in den dezimierten Bildern genauso viel Pixel umfassen, wie bei der anhand von Fig. 5 erläuterten Suchstrategie im Originalbild. Allerdings kann das Suchfenster verringert werden, weil ein Pixel in dem zweifach dezimierten Bild $B_{2i}$ vier Pixel aus dem Originalbild $B_i$ umfaßt. Aus diesem Grund ist auf dieser relativ groben Auflösungsstufe relativ schnell ein Bewegungsvektorfeld ermittelt. Die Bewegungsvektoren geben die tatsächliche Bewegung bzw. Verschiebung zwar nur relativ ungenau wieder, jedoch handelt es sich um eine sehr robuste und gegen Rauschen und andere Bildartefakte unempfindliche Schätzung der Verschiebung bzw. der Bewegung. Dieses Bewegungsvektorfeld wird im Prinzip auf gleiche Weise ermittelt, wie anhand von Fig. 5 erläutert.

Im Schritt 304 wird ausgehend von den (grob) ermittelten Bewegungsvektoren das Verfahren auf der nächsthöheren Auflösungsstufe, d.h. mit den Projektionsbildern $B_{1i}$ und $B_{1i-1}$ wiederholt, wobei der Suchbereich - gemessen an der Zahl der Pixel - gleich groß bleibt (so daß die geometrischen Abmessungen des Suchbereichs nur noch halb so groß sind).

Die bei dieser Suche im Schritt 304 ermittelten Bewegungsvektoren bilden dann ihrerseits im Schritt 305 die Startvektoren für die Suche in dem Bild mit der nächsthöheren Auflösung - im angenommenen Beispiel im Bild $B_{i-1}$.

Diese hierarchische Suchstrategie ergibt eine relativ genaue Bestimmung der Bewegungsvektoren, die weitgehend unempfindlich gegen Artefakte und Rauschen ist und einen vergleichsweise geringen Rechenaufwand erfordert. Das Verfahren zur Bestimmung des Bewegungsvektorfeldes ist danach beendet (Schritt 306).

Zurückkommend zu Fig. 4 wird im Schritt 102 erneut ein Bewegungsvektorfeld m+ bestimmt, das angibt, in welchem Maß und in welcher Richtung die Pixel in dem nächsten Projektionsbild $B_{i+1}$ mit der gleichen Projektionsrichtung wie das Bild $B_i$ gegenüber den ihnen inhaltlich zugeordneten Pixeln im Bild $B_i$ verschoben sind. Die Bestimmung dieses Bewegungsvektors kann auf gleiche Weise erfolgen, wie zuvor anhand der Fig. 5 bis 6 erläutert. Nach diesem Schritt ist für alle Pixel in dem Bild $B_i$ die Lage der damit korrespondierenden Pixel (bzw. der ihnen inhaltlich zugeordneten Pixel) in den Bildern $B_{i-1}$ und $B_{i+1}$ bekannt.

In den Schritten 101 und 102 wurden die Bewegungsvektoren für die drei aufeinanderfolgenden Projektionsbilder $B_{i-1}$, $B_i$ und $B_{i+1}$ ermittelt. Es ist aber auch möglich, nur zwei Projektionsbilder für die Rauschfilterung heranzuziehen (z.B. die Bilder $B_i$ und $B_{i-1}$) oder mehr als drei Bilder. - In den Schritten 101 und 102 wurde je ein Bewegungsvektorfeld für jeweils zwei aufeinanderfolgende Bilder berechnet. Man kann aber auch die Bewegungsvektorfelder für zueinander korrespondierenden Blöcke in den drei (oder mehr) Bildern gleichzeitig ermitteln, indem man Statistiken höherer Ordnung verwendet, z.B. die Dreifach-Korrelation. Dann wäre anstelle der Schritte 101 und 102 nur ein einziger Schritt zur Bestimmung des Bewegungsvektorfeldes erforderlich.

Es kann dann im Schritt 103 eine Rauschfilterung erfolgen unter Heranziehung der Bildwerte von inhaltlich einander zugeordneten bzw. zueinander korrespondierenden Pixeln. Es gibt verschiedene Möglichkeiten für das zentrale Pixel im Block b im Bild $B_i$ einen gefilterten Bildwert $B_{if}$ zu ermitteln:

a) Der gefilterte Bildwert für dieses Pixel wird als arithmetisches Mittel der Bildwerte der zentralen Pixel in den Bildern $B_{i-1}$, $B_i$ und $b_{i+1}$ berechnet. Dabei würde sich das Signal/Rauschverhältnis um ca. 1,7 verbessern.

b) Der gefilterte Bildwert wird als arithmetischer Mittelwert der zentralen Pixel und ihrer Nachbarpixel berechnet, insgesamt also aus den Bildwerten von neun Pixeln. Das Signal/Rauschverhältnis könnte dabei um einen Faktor 3 verbessert werden, allerdings auf Kosten der Bildschärfe.

c) Die Bildwerte der erwähnten Pixel werden gewichtet summiert, wobei das relative Gewicht, mit dem ein Bildwert eingeht, umso größer ist, je kleiner die Differenz zwischen diesem Bildwert und dem Bildwert für das zentrale Pixel im Bild $B_i$ ist. Dabei kann ein Maximalwert für das relative Gewicht festgelegt werden, damit das Gewicht von unterhalb eines unteren Grenzwertes liegenden Differenzen, die auch durch Rauschen verursacht sein können, nicht zu stark eingeht. Das damit erzielbare Signal/Rauschverhältnis ist zwar im allgemeinen kleiner als 3, jedoch handelt es sich um ein Kanten erhaltendes (edge preserving) Filter, weil große Differenzen, wie sie an Bildkanten auftreten können, nur mit einem geringen Gewicht eingehen. Die feinen Strukturen im Bild bleiben daher - soweit sie sich vom Rauschen unterscheiden - erhalten.

Wenn noch nicht alle Projektionsrichtungen verarbeitet worden sind, was im Schritt 104 überprüft wird, wird das Verfahren für Projektionsbilder mit einer anderen Projektionsrichtung (Schritt 105) wiederholt, bis für alle Projektionsrichtungen, die in einem für ein zweidimensionales MR-Bild erforderlichen Meßzyklus erfaßt wurden, ein rauschgemindertes Projektionsbild zur Verfügung steht. Aus diesen gefilterten Projektionsbildern $B_{if}$ läßt sich in an sich bekannter Weise ein zweidimensionales MR-Bild rekonstruieren (Schritt 106). Dieses MR-Bild läßt die anatomischen Strukturen genauso erkennen, wie ein MR-Bild, das unmittelbar aus den Projektionsbildern für die verschiedenen Projektionsrichtungen rekonstruiert wird, jedoch weist es ein deutlich verbessertes Signal/Rauschverhältnis auf. Das Verfahren ist dann für die zum gleichen Meßzyklus gehörigen Projektionsbilder beendet - Schritt 107. Das gleiche Verfahren muß dann für Projektionsbilder durchgeführt werden, die zu dem nächsten Meßzyklus (für das nächste zweidimensionale MR-Bild) gehören.

Nachfolgend wird anhand der Fig. 7 eine besonders schnelle Variante zur Rauschminderung bei einem einzelnen Projektionsbild erläutert.

Nach der Initialisierung 400 wird im Schritt 401 ein Block b im Bild $B_i$ vorgegeben, der bezüglich des Pixels j zentriert ist. Dieser Block kann z.B. nur drei Pixel umfassen. Es muß dann der Block b' im vorangehenden Bild $B_{i-1}$ bestimmt werden, der am besten mit dem Block b übereinstimmt. Aus der Verschiebung der beiden Blöcke innerhalb der beiden Bilder ergibt sich der Bewegungsvektor m (Fig. 2). Die Bestimmung des Bewegungsvektors m erfolgt auf folgende Weise:

Im Schritt 402 wird das Ähnlichkeitsmaß $M_1$ zwischen dem Block b und einem Block b'(j) bestimmt, der im Bild $B_{i-1}$ die gleiche Lage hat wie der Block b im Bild $B_i$, der also um das Pixel j in diesem Bild zentriert ist (entsprechend einem Bewegungsvektor Null). Das Ähnlichkeitsmaß $M_1$ kann beispielsweise dadurch errechnet werden, daß der Betrag der Differenz der Bildwerte der in den Blöcken b und b'(j) einander entsprechenden Pixel berechnet wird. - Danach wird auf die gleiche Weise das Ähnlichkeitsmaß $M_2$ zwischen dem Block b und einem Block b'(j+t) im Bild $B_{i-1}$ berechnet, der gegenüber dem Block b um den Bewegungsvektor t versetzt ist, der für das Pixel j im Bild $B_{i-1}$ (durch Vergleich mit dem diesen vorangehenden Bild - $B_{i-2}$) ermittelt wurde.

In einem weiteren Schritt 404 wird ein drittes Ähnlichkeitsmaß $M_3$ berechnet zwischen dem Bildausschnitt b und einem im Bild $B_{i-1}$ um den Bewegungsvektor m versetzten Bildausschnitt b'(j+m). Wenn der Schritt 401 für das Pixel j zum ersten Mal durchlaufen wird, ist m=0.

In einem weiteren Schritt 405 wird schließlich das Ähnlichkeitsmaß $M_4$ für den Block b und einen Block b'(j+m+s) ermittelt, der im Bild $B_{i-1}$ gegenüber dem Pixel j um den Bewegungsvektor m+s versetzt ist. s ist dabei eine Zufallszahl, die z.B. zwischen +4 und -4 (Pixelabständen) liegen kann.

Im Schritt 406 wird dann bestimmt, welches der vier Ähnlichkeitsmaße die beste Übereinstimmung repräsentiert. Der diesem Ähnlichkeitsmaß zugeordnete, mit u bezeichnete Bewegungsvektor wird bestimmt. Weiterhin wird der neue Bewegungsvektor m gleich dem gefundenen Bewegungsvektor u gesetzt.

Danach wird die aus den Schritten 404 ... 406 bestehende Schleife mehrfach, z.B. vier- oder fünfmal, durchlaufen, wobei sich die Werte $M_3$ und $M_4$ ändern können. Nach dem letzten Durchlauf ist derjenige Bewegungsvektor m ermittelt, für den sich die beste Übereinstimmung zwischen den Blöcken b und b' ergibt.

Im darauf folgenden Schritt 407 wird das zu dem Pixel j benachbarte Pixel - j + 1 - ausgewählt. Für dieses Pixel werden dann die Schritte 401 bis 406 wiederholt, danach für das übernächste Pixel usw., bis am Ende für alle Pixel des Bildes $B_i$ ein Bewegungsvektor gefunden wurde.

Die Filterung - Schritt 408 - kann dann erfolgen, indem für das Pixel j im Bild $B_i$ ein gefilterter Wert aus der gewichteten Summe der Bildwerte des Pixels j und seiner beiden Nachbarpixel sowie der - über den Bewegungsvektor m - im Bild $B_{i-1}$ inhaltlich zugeordneten Pixel des Blockes b' gebildet wird. Das relative Gewicht $w_i$, mit dem die Bildwerte des Blockes b in diese Summierung eingehen, wird dabei nach der Gleichung

$$w_i = \frac{c}{\alpha d + 1} \qquad (1)$$

berechnet. Dabei ist d der Betrag der Differenz zwischen dem Bildwert des betreffenden Pixels und dem Bildwert des Pixels j. $\alpha$ ist ein Faktor, mit dem sich vorgeben läßt, in welchem Ausmaß Kanten im Bild erhalten bleiben. Für $\alpha = 0$ werden die Kanten unscharf; für zunehmende Werte von $\alpha$ werden die Kanten besser erhalten, und das Signal/Rausch-Verhältnis an der Kante weniger verbessert. Ein geeigneter Wert für $\alpha$ ist z.B. $\alpha = 1,5$. c ist eine Normierungskonstante.

Die Gewichtungsfaktoren $w_{i-1}$, mit der die Bildwerte der Pixel des Blockes b' in die gewichtete Summierung des gefilterten Wertes für das Pixel j im Block b eingehen, ergibt sich aus der Gleichung

$$w_{i-1} = w_i \frac{c}{\alpha d + 1} \qquad (2)$$

Dabei ist d wiederum der Betrag der Differenz zwischen dem Bildwert des betreffenden Pixels und dem Bildwert des Pixels j im Bild $B_i$, und $w_i$ ist der Gewichtungsfaktor des Pixels im Block b, das im Block die gleiche Lage hat wie das betreffende Pixel im Block b'. Der

Gewichtungsfaktor $w_j$ für das Pixel j im Block b beträgt c. c wird so gewählt, daß die Summe der auf diese Weise errechneten sechs Gewichtungsfaktoren 1 ist.

Während auf diese Weise für das Bild $B_i$ ein gefiltertes Ausgangsbild berechnet wird, können bereits die MR-Signale für das nächste Projektionsbild akquiriert werden, bei dem der Lesegradient eine andere Richtung hat (vergl. die Pfeile in Fig. 2) als der Lesegradient für das Bild $B_i$. Die Filterung macht sich im zeitlichen Ablauf des Verfahrens also nicht bemerkbar. Aus den gefilterten eindimensionalen Ausgangsbildern können dann mit Hilfe des üblichen Rekonstruktionsalgorithmen zweidimensionale Bilder (mit verbessertem Signal/Rauschverhältnis) rekonstruiert werden.

Vorstehend wurde davon ausgegangen, daß die Projektionsbilder ein Objekt in unterschiedlichen Bewegungsphasen erfassen. Es kann sich jedoch auch um solche Projektionsbilder handeln, die ein ruhendes Objekt in verschiedenen, zueinander parallelen Schichten - z.B. entlang des Körperstamms - aus derselben Projektionsrichtung darstellen. Grundannahme ist, da man solche (eindimensionalen) Bilder miteinander vergleicht, die das Untersuchungsobjekt mit der gleichen (oder der entgegengesetzten) Projektionsrichtung darstellen, die also identisch wären, wenn das Untersuchungsobjekt sich nicht bewegen würde und wenn den MR-Signalen nicht Rauschen überlagert wäre (Auf der Gültigkeit dieser Annahme basiert auch die vorstehend erläuterte Bewegungsschätzung zur Bestimmung der Bewegungsvektorfelder). Auch hierbei ist die Annahme weitgehend erfüllt, daß benachbarte Bilder die gleichen Strukturen - wenn auch gegebenenfalls in anderer Lage - wiedergeben.

Vorstehend wurden die Bewegungsvektoren aus den Bildwerten abgeleitet, d.h. aus der Amplitude der Kernmagnetisierung in dem betreffenden Bildpunkt. Da mit der Anordnung nach Fig. 1 aber auch gleichzeitig die Phase der Kernmagnetisierungsverteilung für jeden Bildpunkt erfaßt werden kann und da diese Phase stark von Objektbewegungen beeinflußt werden kann, kann auch diese Phase (zusätzlich) zur Bestimmung der Bewegungsvektorfelder herangezogen werden.

Das erfindungsgemäße Bildverarbeitungsverfahren wurde vorstehend in Verbindung mit einer Folge von MR-Bildern beschrieben. Es kann jedoch auch auf eine Folge von Röntgen-CT-Aufnahmen angewandt werden. Allerdings basieren die Projektionsbilder dabei in der Regel nicht auf einer Parallelprojektion, wie bei Fig. 1, sondern auf einer Zentralprojektion - entsprechend der Geometrie des Röntgenstrahlenfächers. Aus diesen Projektionsbildern werden dann in derselben Weise, wie in Verbindung mit Fig. 3-7 beschrieben, gefilterte Ausgangsbilder berechnet, bevor daraus ein zweidimensionales Röntgen-CT-Bild rekonstruiert wird.

**Patentansprüche**

1. Bildverarbeitungs-Verfahren für die medizinische Diagnostik, bei dem ein in einem Untersuchungsbereich befindliches Objekt mit einer Folge von zweidimensionalen Bildern aufgenommen wird, wobei jedes Bild der Folge aus einer Anzahl von eindimensionalen Projektionsbildern abgeleitet ist, die durch Projektion des Objektes aus einer von einer Anzahl vorgegebener Projektionsrichtungen erzeugt werden und sich aus Pixeln zusammensetzen,
gekennzeichnet durch folgende Schritte:

> a) Ermittlung (101, 102) eines Bewegungsvektorfeldes, das die inhaltlich einander zugeordneten Pixel in Projektionsbildern mit der gleichen und/oder der entgegengesetzten Projektionsrichtung miteinander verknüpft,
> b) Anwendung (103) eines Rauschminderungs-Filters auf die Bildwerte der durch das Bewegungsvektorfeld miteinander verknüpften Pixel und ggf. auf deren Nachbarpixel,
> c) Übernahme (103) der aus der Filterung resultierenden Bildwerte in ein Ausgangs-Projektionsbild,
> d) Rekonstruktion der Bilder aus den zugehörigen Ausgangs-Projektionsbildern.

2. Bildverarbeitungs-Verfahren nach Anspruch 1, gekennzeichnet durch die folgenden Schritte zur Ermittlung des Bewegungsvektorfeldes für ein Projektionsbild:

> a) Vorgabe eines Blockes (b) von zusammenhängenden Pixeln in diesem Projektionsbild $(B_i)$ ,
> b) Ermittlung der Position eines in wenigstens einem der vorangehenden oder nachfolgenden, mit der gleichen und/oder der entgegengesetzten Projektionsrichtung erzeugten Projektionsbilder $(B_{i-1})$ befindlichen Blockes (b'), der am besten mit dem Blocke (b) in dem einen Projektionsbild übereinstimmt,
> c) Ableitung des Bewegungsvektors aus der so ermittelten Positionen des Blocks oder der Blöcke (b').
> d) Wiederholung der Schritte b) und c) für andere Blöcke in dem Projektionsbild $(B_i)$.

3. Bildverarbeitungs-Verfahren nach Anspruch 2, gekennzeichnet durch die folgenden Schritte zur Ermittlung der Position der am besten übereinstimmenden Blöcke:

> a) Verwendung (203) eines Ähnlickeitsmaßes zur Bewertung der Übereinstimmung eines Blockes (b) in dem einen Projektionsbild $(B_i)$ mit einem in dem anderen Projektionsbild $(B_{i-1})$ in unterschiedlichen Positionen befindlichen Block (b'),

b) Ermittlung (204) derjenigen Position, für die das optimale Ähnlickeitsmaß resultiert.

4. Bildverarbeitungs-Verfahren nach Anspruch 3, gekennzeichnet durch die folgenden Schritte zur Ermittlung der Position mit dem optimalen Ähnlickeitsmaß :

   a) Ermittlung des Ähnlickeitsmaßes für eine Startposition des Blockes (b'),
   b) Änderung (205) der Position des Blockes (b') und Ermittlung des Ähnlickeitsmaßes für die geänderte Position,
   c) Ableitung einer neuen Position aus den Ähnlichkeitsmaßen für die vorherigen Positionen und Ermittlung des Ähnlichkeitsmaßes für diese Position,
   d) Iterative Wiederholung des Schrittes c.

5. Bildverarbeitungs-Verfahren nach Anspruch 1, gekennzeichnet durch die folgenden Schritte:

   a) Erzeugung (301, 302) von mindestens einem Projektionsbild ($B_{1i}$, $B_{2i}$) mit reduziertem räumlichen Auflösungsvermögen und einer reduzierten Anzahl von Pixeln für jedes Projektionsbild der Folge
   b) Ermittlung (303) von Bewegungsvektoren, die die inhaltlich einander zugeordneten Pixel in verschiedenen Projektionsbildern ($B_{2i}$, $B_{2i-1}$) der Folge miteinander verknüpfen
   c) Wiederholung (304) des Schrittes b) für die Projektionsbilder ($B_{1i}$, $B_{1i-1}$) mit dem nächsthöheren räumlichen Auflösungsvermögen, wobei von den zuvor ermittelten Bewegungsvektoren ausgegangen wird.

6. Bildverarbeitungs-Verfahren nach Anspruch 1, dadurch gekennzeichnet, daß die Anwendung des Rauschminderungs-Filters für den gefilterten Bildwert eines Pixels in einem Projektionsbild eine gewichtete Summierung der Bildwerte derjenigen Pixel umfaßt, die diesem Pixel in den anderen Projektionsbildern inhaltlich zugeordnet bzw. dazu benachbart sind, wobei die Gewichtungsfaktoren umso größer sind, je geringer die Differenz der Bildwerte dieses Pixels und eines der genannten Pixel sind.

7. Bildverarbeitungs-Verfahren nach Anspruch 8, gekennzeichnet durch ein mehrere Zyklen umfassendes Verfahren zur Bestimmung eines Bewegungsvektors für ein Pixel (j) eines Projektionsbildes, wobei jeder Zyklus folgende Schritte umfaßt

   a) Vorgabe verschiedener Bewegungsvektoren (t, s, m), von denen wenigstens einer von Zyklus zu Zyklus zu Zyklus veränderlich ist.
   b) Bewertung der durch jeden Bewegungsvektor (m) einander zugeordneten Blöcke durch ein Ähnlichkeitsmaß ($M_1$ ...... $M_4$)
   c) Auswahl des Bewegungsvektors (m) mit dem günstigsten Ähnlichkeitsmaß
   d) Wiederholung der Schritte a) - c) im nachfolgenden Zyklus

8. Anordnung zur Durchführung des Bildverarbeitungs-Verfahrens nach Anspruch 1, mit Mitteln zum Erzeugen von einer Folge von Bildern eines in einem Untersuchungsbereich befindlichen Objektes, wobei jedes Bild der Folge aus einer Anzahl von Projektionsbildern abgeleitet ist, die durch Projektion des Objektes aus einer von einer Anzahl vorgegebener Projektionsrichtungen erzeugt werden und sich aus Pixeln zusammensetzenund mit einer programmierbaren Bildverarbeitungseinheit (24) zum Verarbeiten der Projektionsbilder, dadurch gekennzeichnet, daß die Bildverarbeitungseinheit (24) derart programmiert ist, daß folgende Schritte ausgeführt werden:

   a) Ermittlung (101, 102) eines Bewegungsvektorfeldes, das die inhaltlich einander zugeordneten Pixel in Projektionsbildern mit der gleichen und/oder der entgegengesetzten Projektionsrichtung miteinander verknüpft,
   b) Anwendung (103) eines Rauschminderungs-Filters auf die Bildwerte der durch das Bewegungsvektorfeld miteinander verknüpften Pixel und ggf. auf deren Nachbarpixel,
   c) Übernahme (103) der aus der Filterung resultierenden Bildwerte in ein Ausgangs-Projektionsbild
   d) Rekonstruktion der Bilder aus den zugehörigen Ausgangs-Projektionsbildern

Fig.1

EP 0 864 999 A2

101

$V_-(B_i/B_{i-1})$

100

102

$V_+(B_i/B_{i+1})$

$i := i+1$

103

$B_{if} = F(B_i/V_+/V_-)$

104

$i = i_{max}?$

# Fig.2

$B_{i-1}$      $B_i$      $B_{i+1}$

# Fig.8

Fig.3

Fig.4

Fig.5

Fig.6

Fig.7

Fig.9

Fig.10

400

401 $b(B_i,j)$

402 $M_1(b,b'(j))$

403 $M_2(b,b'(j+t))$

404 $M_3(b,b'(j+m))$

4x

405 $M_4(b,b'(j+m+s))$

406 $Opt(M_1 \cdots M_4) \; ; \; m:=u$

407 $j=j+1$

# Fig.11